# EUROPÄISCHE PATENTSCHRIFT

(11) **EP 1 974 091 B1**
(45) Veröffentlichungstag und Bekanntmachung des Hinweises auf die Patenterteilung: **21.11.2012**
(21) Anmeldenummer: 07711326.4
(22) Anmeldetag: 09.01.2007
(51) Int. Cl.: D06N 7/00, B32B 27/18, B32B 27/12, E04F 15/16, E04F 15/10

(54) **VERFAHREN ZUM HERSTELLEN EINES BAHNFÖRMIGEN, LINOLEUMÄHNLICHEN MATERIALS UND BAHNFÖRMIGES MATERIAL, NÄMLICH EIN BODENBELAG**
PROCESS FOR PRODUCTION OF A WEB-TYPE, LINOLEUM-LIKE MATERIAL AND WEB-TYPE MATERIAL, NAMELY A FLOOR COVERING
PROCEDE DE FABRICATION DE BANDES DE MATERIAUX DU TYPE LINOLEUM ET BANDE DE MATERIAU, À SAVOIR UN REVÊTEMENT DE SOL

(30) Priorität: 09.01.2006 DE 102006001097
(43) Veröffentlichungstag der Anmeldung: 01.10.2008
(73) Patentinhaber: Tesch, Günter, 1700 Fribourg (CH)
(72) Erfinder: Tesch, Günter, 1700 Fribourg (CH)
(74) Vertreter: Lesser, Karl-Bolko
(86) Internationale Anmeldenummer: PCT/EP2007/000123
(87) Internationale Veröffentlichungsnummer: WO 2007/080098

(56) Entgegenhaltungen:
- EP-A- 0 256 663
- DE-A- 60 015
- ES-A6- 2 005 835
- GB-A- 105 864
- GB-A- 675 663
- DATABASE WPI Week 197837 Derwent Publications Ltd., London, GB; AN 1978-66166A XP002431460 & JP 53 091102 A (HONEY CHEM IND CO LTD) 10. August 1978 (1978-08-10)
- DATABASE WPI Week 198751 Derwent Publications Ltd., London, GB; AN 1987-359920 XP002431625 & JP 62 263384 A (AIN ENG KK) 16. November 1987 (1987-11-16)
- DATABASE WPI Week 197848 Derwent Publications Ltd., London, GB; AN 1978-86787A XP002431626 & JP 53 121902 A (TAKUMI KOGYO KK) 24. Oktober 1978 (1978-10-24)

## Beschreibung

Die Erfindung betrifft ein Verfahren zum Herstellen eines bahnförmigen, linoleumähnlichen nach Oberbegriff des Anspruches 1 und ein damit hergestelltes bahnförmiges Material, nämlich einen Bodenbelag.

### Stand der Technik

Als bahnförmige Materialien werden hier z.B. Boden- und Wandbeläge, Matten, Decken, Abdeckungen od. dgl. angesehen.

Bekannte bahnförmige Materialien können aus Kunststoff, z.B. PVC-Bahnen, aus textilen Fasern, z.B. Teppiche, aus nachwachsenden Rohstoffen, z.B. Linoleum oder anderen Stoffen bestehen.

Dabei können die bahnförmigen Materialien wasserdurchlässig oder wasserundurchlässig. Sie können eine glatte oder eine unebene, z.B. rauhe Oberfläche aufweisen. Die bahnförmigen Materialien können aus einem bestimmten Stoff bestehen oder aus mehreren. In der Regel weisen diese Bahnen einen Träger bzw. eine Trägerschicht auf, die der Bahn eine bessere mechanische Stabilität gibt.

Ein solches bahnförmiges Material kann z.B. Linoleum sein, das schon sehr lange hergestellt wird und fast genauso lange wird daran gearbeitet einen linoleumähnlichen Bodenbelag herzustellen.

Das herkömmliche Linoleum besteht im Wesentlichen aus einem Gemisch aus Leinöl und gemahlenem Kork, das auf einer Trägerschicht, insbesondere ein Gewebe aufgetragen wird. Das aufgetragene und abgebundene Gemisch aus nachwachsenden Rohstoffen bildet eine wasserdichte Sicht- und Deckschicht.

Der gesamte Produktionsprozess dauert bei der Produktion von Linoleum insbesondere wegen der langen Reifezeit des Linoleums sehr lange, weshalb schon vor weit über 100 Jahren nach einem Verfahren gesucht wurde einen linoleumähnlichen Bodenbelag herzustellen.

In der DE 97 932 aus dem Jahre 1897 wird beschrieben, dass es damals schon bekannt war, den Kork durch andere Stoffe zu ersetzen, und auf die DE 60 015 verwiesen, in der beschrieben ist, anstelle des Korkes gemahlenes Leder in Form von Rohleder einzusetzen. Die DE 97 932 selbst lehrt, anstelle des gemahlenen Korkes bzw. des gemahlenen Rohleders geröstetes Leder in fein gemahlenen Zustand (sogenannte Lederkohle oder Ledermehl) zu benutzen, dieses mit oxidierten Leinöl und eventuell von Klebemitteln und Harzen zu einem steifen Brei zu mischen und diesen Brei auf ein festes, grobes Gewebe so aufzutragen, dass das Gewebe nicht hervortritt. Das Ganze wird dann noch dicht gewalzt oder gepresst.

Das Linoleum und auch die bisher bekannten linoleum-ähnlichen Bodenbeläge sind relativ schwer, insbesondere aber auch schwer zu verlegen. Auch sind die Herstellungsverfahren sehr aufwendig.

Bekannt sind auch Bodenbeläge aus Kunststoff, insbesondere aus PVC, bei dem auf einer z.B. aus einem Gewebe bestehenden Trägerschicht eine Schicht aus PVC angeordnet ist, die auf die Trägerschicht extrudiert wird und mit dieser verbunden ist. Auch diese Bodenbeläge können als bahnförmiges Material vorliegen und verlegt werden.

Wenngleich bahnförmiges Material aus PVC sehr preiswert hergestellt werden kann und auch gut haltbar ist, wird es jedoch aus Umweltschutzgründen inzwischen nicht mehr so viel verwendet.

Bahnförmige Materialien werden auch aus Polyäthylen hergestellt, diese haben dann aber den Nachteil, dass die Oberflächen der Bahnen leicht verletzt werden können und sehr schnell Riefen bekommen.

Bahnförmige Materialien aus Polyurethan sind sehr teuer und nicht so leicht zu verarbeiten.

Diese bekannten bahnförmigen Materialien sind entweder sehr schwer und langwierig herzustellen, wie z.B. Linoleum oder nicht besonders umweltfreundlich, wie z.B. PVC-Bodenbeläge.

Allen zuvor beschriebenen bahnförmigen Materialien aus Kunststoff ist gemeinsam, dass sie ein ungünstiges Trittschall-Verbesserungsmaß haben und nur von Spezialisten aufwändig zu verlegen sind.

### Erfindung

Der Erfindung liegt deshalb die Aufgabe zugrunde ein gattungsgemäßes Verfahren zum Herstellen eines bahnförmigen Materials mit einer Sicht- und Deckschicht zu schaffen, das nicht nur leichter als herkömmliche Linoleum,- oder linoleum-ähnliche Bodenbeläge ist, eine vielfältige Möglichkeit der Musterung bietet, trittschalldämmend ist und aus einem hohen Maß an natürlich nachwachsenden Rohstoffoffen besteht. Auch soll es im Gebrauch nicht sehr leicht verletzbar und pflegeleicht sein. Aufgrund der Verwendung eines ganz anderen Verfahrens soll das bahnförmige Material auch einfacher und preiswerter hergestellt werden können.

Diese Aufgabe wird durch die im Anspruch 1 und 11 beschriebene Erfindung gelöst.

Anstelle des bisher für die Linoleum-Herstellung verwendeten Korks, der immer knapper wird, werden insbesondere feinteilige Lederstücken verwendet, die vielfach bei der Bearbeitung von Lederartikeln als Rest übrigbleiben.

Vorteilhafterweise wird das thermisch aktivierbare Bindemittel spätestens nach dem Aufbringen auf die Trägerbahn erhitzt.

Das Gemisch aus Lederstücken und Bindemittel wird in einen Extruder gebracht und aus diesem heraus auf die Trägerbahn extrudiert.

Damit das bahnförmige Material eine gleichmäßige insbesondere ebene Oberfläche erhält, wird das bahnförmige Material nach dem Aufbringen des Gemisches auf die Trägerbahn kalandert. Dabei kann das bahnförmige Material dreidimensional verformt und / oder strukturiert werden.

Wenn dabei das bahnförmige Material im noch warmen Zustand des Gemisches kalandert wird, wird insbesondere die Einbindung der Sicht- und Deckschicht in und an die Trägerbahn verbessert. Insbesondere kann aber auch das bahnförmige Material unter Zuführung weiterer Wärme kalandert werden.

Vorzugsweise werden die Lederstücken unterschiedlicher Farbe und Größe mit dem Bindemittel gemischt. Da das Bindemittel auch transparent sein kann. bilden diese Unterschiede eine sichtbare Musterung und Strukturierung der Sicht- und Deckschicht.

Gemäß der Erfindung werden als feinteilige Ledersstücken Lederspäne sehr kleiner Abmessung verwendet. Diese können durch Raspeln von Lederabfällen erhalten werden. Diese Lederspäne können in ihrer maximalen Abmessung kleiner als 5 mm. insbesondere kleiner als 3 mm sein.

Gemäß einer vorteilhaften Ausführungsform des Verfahrens wird ein Bindemittel verwendet, welches mit den Lederteilchen eine gute Bindung eingeht. Dies kann z. B. Polyurethan in thermoplastischer Form, Polyolefine, Acrylat-Polymere, aber auch PVC oder Bitumen sein. Es können auch Gemische aus Polymeren verwendet werden, welche dann spätestens beim heißen Kalandern zum Polymerisieren gebracht werden.

Je nach für die Sicht- und Deckschicht verwendeten Bindemittels kann es zweckmäßig sein, nach dem Auftragen des die Sicht- und Deckschicht bildenden Gemisches auf die Trägerschicht und gegebenenfalls eines ersten Kalanderns eine Lage eines insbesondere anderen Kunststoffmaterials aufzutragen und das bahnförmige Material insbesondere nochmals zu kalandern, um z.B. die Gleitfähigkeit auf der Oberfläche der Sicht- und Deckschicht zu verringern.

Ein nach dem Verfahren hergestelltes bahnförmiges Material, weist eine Sicht- und Deckschicht auf, die zwischen 20% und 80%, insbesondere 40% bis 60% feinteilige Lederstücken und ein Bindemittel enthält. Dieses lässt sich sehr einfach verlegen und pflegen.

Neben den feinteiligen Lederstücken kann die Sicht- und Deckschicht noch Wolle aufweisen, es können aber auch oder alternativ in der die Sicht- und Deckschicht textile Fasern vorhanden sein, die die Sicht- und Deckschicht verstärken.

Vorteilhafterweise bildet die Sicht- und Deckschicht aus dem Gemisch aus feinteiligen Lederstücken, dem Bindemittel und gegebenenfalls der Wolle und / oder den Fasern eine abriebfeste Masse.

Vorzugsweise ist das Bindemittel in der Sicht- und Deckschicht transparent und die feinteiligen Lederstücken und gegebenenfalls die Wolle und die Fasern sind von der Sichtseite des bahnförmigen Materials sichtbar.

Durch die feinteiligen Lederstücken und die gegebenenfalls unterschiedlich gefärbte Wolle und die textilen Fasern lassen sich aufgrund der Transparenz des Kunststoffmaterials unterschiedlich gemusterte bahnförmige Materialien erzeugen.

Die textilen Fasern können natürliche oder künstliche Fasern sein und insbesondere als Kurzfasern vorliegen.

Die Trägerschicht kann aus einem Gelege, einem Gewebe, einem Spunbond oder aus einem Non-woven bestehen, wie sie z.B. anderen bahnförmigen Materialen wie Bodenbelägen od. dgl. allgemein bekannt sind, was auch mit dem späteren Verwendungszweck des bahnförmigen Materials zusammenhängt, wobei der Fachmann hier die zweckmäßigste Trägerschicht auswählen wird.

Das Kunststoffmaterial in der Sicht- und Deckschicht besteht aus einem polymeren Material, vorzugsweise aus einem Gemisch verschiedener polymerer Materialien. wobei das Kunststoffmaterial in der Sicht- und Deckschicht vorzugsweise aus einem Material besteht, welches zumindest nach dem Binden in dem fertigen bahnförmigen Material transparent ist.

Auf der Sicht- und Deckschicht kann eine weitere Schicht aus einem Kunststoffmaterial angeordnet sein, die besonders abriebfest ist. Diese Schicht kann relativ dünn sein und schützt die zuvor beschriebene Sicht- und Deckschicht. Insbesondere dann kann der Anteil an Lederstücken in der Sicht- und Deckschicht auch über 50% und bis 80% betragen. Diese zusätzlich Schicht ist transparent, so dass die Sicht- und Deckschicht durch diese Schicht sichtbar ist.

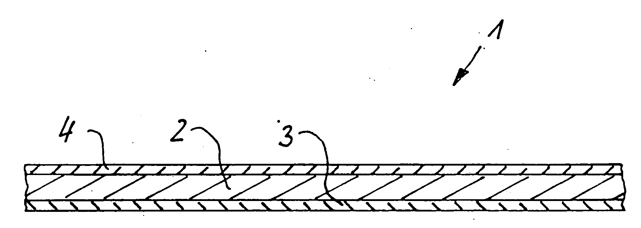

Weitere Einzelheiten der Erfindung ergeben sich aus den Unteransprüchen und aus einem im Folgenden anhand der Zeichnung beschriebenen Ausführungsbeispiel.

### Ausführungsbeispiel

Die Zeichnung mit ihrer einzigen Figur zeigt einen Querschnitt durch einen Abschnitt eines bahnförmigen linoleumähnlichen Materials 1.

Für die Herstellung eines bahnförmigen linoleumähnlichen Materials 1 mit einer Sicht- und Deckschicht 2 aus vornehmlich nachwachsenden Rohstoffen und mit einer Trägerschicht 3 werden Lederstücken und Lederpulver mit einem Bindemittel in einem Mischer innig gemischt und nach dem Mischen als Sicht- und Deckschicht 2 auf eine kontinuierlich vorbeilaufende Trägerbahn aufgebracht. Nach dem Mischen kann dabei das Gemisch in einen Extruder gebracht und aus diesem heraus auf die Trägerbahn 3 mittels einer Breitschlitzdüse extrudiert werden. Alternativ kann das Gemisch unter Umrühren und Erwärmen klebfähig gemacht und danach auf einer Trägerbahn 3 verteilt werden.

Die Trägerbahn 3 wird mit der darauf befindlichen Sicht- und Deckschicht 2 aus dem vorgenannten Gemisch sofort kalandert, wobei die noch vorhandene Wärme des Gemisches ausgenutzt wird. Sollte das Gemisch schon zu weit abgekühlt sein, was unter anderem von der Art des Bindemittels und dem Abstand zwischen der Auftragsvorrichtung, wie dem genannten Extruder, und dem Kalander abhängt, so kann beim Kalandern über die Walzen oder durch eine Heizung noch Wärme zugeführt werden.

Es dabei darauf zu achten, dass sich das Gemisch 2 ausreichend fest und unlösbar mit der Trägerbahn 3 verbindet.

Beim Mischen werden feinteilige Lederstücken unterschiedlicher Farbe und Größe mit dem Bindemittel, wie einem Kunststoffmaterial, gemischt, sodass eine Strukturierung des Gemisches und später der Sicht- und Deckschicht erhalten wird.

Als Ledersstücken werden Lederspäne sehr kleiner Abmessung verwendet, die z.B. eine maximale Längenausdehnung von 3 mm und einen maximalen Querschnitt von weniger als 1 mm aufweisen. Diese Lederspäne werden z.B. durch Raspeln von Lederresten oder Lederabfällen erhalten.

Als Kunststoffmaterial wird ein Polymer oder ein Gemisch aus Polymeren verwendet. Es kann auch ein Bitumen oder ein ähnlicher Stoff verwendet werden.

Bei einer besonderen Ausführungsform, bei der das bahnförmige Material 1 als Bodenbelag verwendet werden soll, wird nach dem Auftragen des die Sicht- und Deckschicht 2 bildenden Gemisches auf die Trägerschicht 3 und eines ersten Kalanderns eine Lage eines anderen Kunststoffmaterials 4 aufgetragen und das bahnförmige Material 1 insbesondere nochmals kalandert. Durch dieses andere Kunststoffmaterial 4 wird dem bahnförmigen Material 1 eine rutschhemmende Wirkung verliehen.

Das durch das vorgenannte Verfahren hergestellte bahnförmige Material 1 weist eine Sicht- und Deckschicht 2 aufweist, die etwa 50 Gewichtsprozent feinteilige Lederspäne, etwa 25 Gewichtsprozent Lederpulver und etwa 20 Gewichtsprozent eines polymeren Kunststoffmaterials auf, wobei der Rest des Gewichtes auf natürliche oder synthetische Kurzfasern enthält, die dem Gemisch anfangs beim Mischen zugemischt wurden.

Bei diesen Kurzfasern kann es sich um Woll-, Baumwoll-, Jute oder andere textile Fasern handeln.

Die Sicht- und Deckschicht aus dem zuvor beschriebenen Gemisch bildet eine abriebfeste Masse, auf der noch eine dünnere Lage eines Kunststoffmaterials angeordnet ist, das dem bahnförmigen Material einen Gleitschutz bietet.

Das Kunststoffmaterial in und auf der Sicht- und Deckschicht ist zumindest nach dem Binden transparent, so dass die feinteiligen Lederstücke, das Lederpulver und die Fasern von der Sichtseite des bahnförmigen Materials sichtbar sind.

Die Trägerschicht besteht aus einem Gelege, einem Gewebe, einem Spunbond oder aus einem Non-woven und verleiht dem bahnförmigen Material die notwendige Flächenstabilität.

## Patentansprüche

1. Verfahren zum Herstellen eines bahnförmigen, linoleumähnlichen Materials, nämlich eines Bodenbelages, mit einer Sicht- und Deckschicht aus vornehmlich nachwachsenden Rohstoffen und mit einer Trägerschicht, **dadurch gekennzeichnet, dass**
- feinteilige Lederstücke mit einem thermisch aktivierbaren Bindemittel gemischt werden,
- als Lederstücke Lederspäne sehr kleiner Abmessung verwendet werden,
- das Gemisch aus Lederstücken und Bindemittel in einen Extruder gebracht und aus diesem heraus als Sicht- und Deckschicht auf die Trägerbahn extrudiert wird, und
- nach dem Auftragen des die Sicht- und Deckschicht bildenden Gemisches auf die Trägerschicht und gegebenenfalls eines ersten Kalanderns eine weitere Lage eines Kunststoffmaterials aufgetragen und das bahnförmige Material insbesondere nochmals kalandert wird.

2. Verfahren nach Anspruch 1, **dadurch gekennzeichnet, dass** das thermisch aktivierbare Bindemittel spätestens nach dem Aufbringen auf die Trägerbahn erhitzt wird.

3. Verfahren nach Anspruch 1 oder 2, **dadurch gekennzeichnet, dass** das bahnförmige Material nach dem Aufbringen des Gemisches auf die Trägerbahn gepresst, insbesondere kalandert wird.

4. Verfahren nach einem der vorhergehenden Ansprüche, **dadurch gekennzeichnet, dass** das bahnförmige Material im noch warmen Zustand des Gemisches kalandert wird.

5. Verfahren nach einem der vorhergehenden Ansprüche, **dadurch gekennzeichnet, dass** das bahnförmige Material unter Einwirkung von Wärme kalandert wird.

6. Verfahren nach einem der vorhergehenden Ansprüche, **dadurch gekennzeichnet, dass** das bahnförmige Material dreidimensional verformt wird.

7. Verfahren nach einem der vorhergehenden Ansprüche, **dadurch gekennzeichnet, dass** das bahnförmige Material strukturiert wird.

8. Verfahren nach einem der vorhergehenden Ansprüche, **dadurch gekennzeichnet, dass** Lederstücken unterschiedlicher Farbe und Größe mit dem Bindemittel gemischt werden.

9. Verfahren nach einem der vorhergehenden Ansprüche, **dadurch gekennzeichnet, dass** als Bindemittel ein Polymer, ein Gemisch aus Polymeren oder ein Bitumen verwendet wird.

10. Verfahren nach einem der vorhergehenden Ansprüche, **dadurch gekennzeichnet, dass** das bahnförmige Material in Fliesen oder Planken aufgeteilt wird.

11. Bahnförmiges linoleumähnliches Material, nämlich ein Bodenbelag, mit einer Sicht- und Deckschicht aus vornehmlich nachwachsenden Rohstoffen und mit einer Trägerschicht, **dadurch gekennzeichnet,**
- **dass** das bahnförmige Material (1) eine Sicht- und Deckschicht (2) aufweist, die zwischen 20 % und 80 %, insbesondere zwischen 40 % und 60 % feinteilige Lederstücken, textile Fasern und ein Bindemittel enthält, wobei als Lederstücke Lederspäne sehr kleiner Abmessung verwendet werden,
- **dass** das Bindemittel in der Sicht- und Deckschicht (2) aus einem Material besteht, welches zumindest nach dem Binden in dem fertigen bahnförmigen Material (1) transparent ist und
- **dass** auf der Sicht- und Deckschicht (2) eine weitere Schicht (4) aus einem Kunststoffmaterial angeordnet ist, die besonders abriebfest ist.

12. Bahnförmiges Material nach Anspruch 11, **dadurch gekennzeichnet, dass** die Sicht- und Deckschicht (2) noch Wolle aufweist.

13. Bahnförmiges Material nach Anspruch 12, **dadurch gekennzeichnet, dass** die textilen Fasern natürliche oder künstliche Fasern sind.

14. Bahnförmiges Material nach einem der Ansprüche 11 bis 13, **dadurch gekennzeichnet, dass** die Sicht- und Deckschicht (2) aus dem Gemisch aus feinteiligen Lederstücken, dem Bindemittel und gegebenenfalls der Wolle eine abriebfeste Masse ist.

15. Bahnförmiges Material nach einem der Ansprüche 11 bis 14, **dadurch gekennzeichnet, dass** das Bindemittel in der Sicht- und Deckschicht (2) transparent ist und die feinteiligen Lederstücken und gegebenenfalls die Wolle und die Fasern von der Sichtseite des bahnförmigen Materials (1) sichtbar sind.

16. Bahnförmiges Material nach einem der Ansprüche 11 bis 15, **dadurch gekennzeichnet, dass** die Trägerschicht (3) aus einem Gelege, einem Gewebe, einem Spunbond oder aus einem Non-woven besteht.

17. Bahnförmiges Material nach einem der Ansprüche 11 bis 16, **dadurch gekennzeichnet, dass** das Bindemittel in der Sicht- und Deckschicht (2) aus einem polymeren Material, vorzugsweise aus einem Gemisch verschiedener polymerer Materialien oder aus einem Bitumen besteht.

## Claims

1. Process for producing a linoleum-like material in the form of a web, namely a floorcovering, with a visible outer layer made of mainly renewable raw materials and with a backing layer, **characterized in that**
- finely divided pieces of leather are mixed with a heat-activatable binder,
- pieces of leather used comprise very small-dimension particles of leather waste from cutting processes,
- the mixture of pieces of leather and binder is introduced into an extruder and is extruded therefrom in the form of visible outer layer onto the backing web, and
- after the application of the mixture forming the visible outer layer to the backing layer and optionally a first calendering process, a further sublayer of a plastics material is applied and the material in the form of a web is in particular again calendered.

2. Process according to Claim 1, **characterized in that** the latest juncture at which the thermally activatable binder is heated is after application to the backing web.

3. Process according to Claim 1 or 2, **characterized in that**, after the application of the mixture to the backing web, the material in the form of a web is pressed, in particular calendered.

4. Process according to any of the preceding claims, **characterized in that** the material in the form of a web is calendered while the mixture is still warm.

5. Process according to any of the preceding claims, **characterized in that** the material in the form of a web is calendered with exposure to heat.

6. Process according to any of the preceding claims, **characterized in that** the material in the form of a web is subjected to three-dimensional deformation.

7. Process according to any of the preceding claims, **characterized in that** the material in the form of a web is structured.

8. Process according to any of the preceding claims, **characterized in that** pieces of leather of different colour and size are mixed with the binder.

9. Process according to any of the preceding claims, **characterized in that** binder used comprises a polymer, a mixture of polymers, or a bitumen.

10. Process according to any of the preceding claims, **characterized in that** the material in the form of a web is divided into tiles or planks.

11. Linoleum-like material in the form of a web, namely a floorcovering, with a visible outer layer made of mainly renewable raw materials and with a backing layer, **characterized in that**
- the material (1) in the form of a web has a visible outer layer (2) which comprises from 20% to 80%, in particular from 40% to 60%, of finely divided pieces of leather, textile fibres, and a binder, where pieces of leather used comprise very small-dimension particles of leather waste from cutting processes,
- the binder in the visible outer layer (2) is composed of a material which, at least after the binding process, in the finished material (1) in the form of a web, is transparent and
- the arrangement has, on the visible outer layer (2), a further layer (4) which is particularly abrasion-resistant, made of a plastics material.

12. Material in the form of a web according to Claim 11, **characterized in that** the visible outer layer (2) also comprises wool.

13. Material in the form of a web according to Claim 12, **characterized in that** the textile fibres are natural or synthetic fibres.

14. Material in the form of a web according to any of Claims 11 to 13, **characterized in that** the visible outer layer (2) made of the mixture of finely divided pieces of leather, of the binder and optionally of the wool is an abrasion-resistant composition.

15. Material in the form of a web according to any of Claims 11 to 14, **characterized in that** the binder in the visible outer layer (2) is transparent, and the finely divided pieces of leather and optionally the wool and the fibres are visible from the visible side of the material (1) in the form of a web.

16. Material in the form of a web according to any of Claims 11 to 15, **characterized in that** the backing layer (3) is composed of a laid scrim, of a woven, of a spunbond or of a non-woven.

17. Material in the form of a web according to any of Claims 11 to 16, **characterized in that** the binder in the visible outer layer (2) is composed of a polymeric material, preferably of a mixture of various polymeric materials, or of a bitumen.

## Revendications

1. Procédé pour la fabrication d'un matériau en forme de bande, analogue au linoleum, à savoir un revêtement de sol, présentant une couche visible et de recouvrement principalement constituée par des matières premières renouvelables et une couche support, **caractérisé en ce que**
- des morceaux de cuir finement divisés sont mélangés avec un liant thermoactivable,
- comme morceaux de cuir, des copeaux de cuir de très petites dimensions sont utilisés,
- le mélange de morceaux de cuir et de liant est amené dans une extrudeuse et est extrudé de celle-ci sous forme de couche visible et de recouvrement sur la bande support, et
- après l'application du mélange formant la couche visible et de recouvrement sur la couche support et le cas échéant après une première calandreuse, une autre épaisseur d'un matériau synthétique est appliquée et le matériau en forme de bande est en particulier à nouveau calandré.

2. Procédé selon la revendication 1, **caractérisé en ce que** le liant thermoactivable est chauffé au plus tard après l'application sur la bande support.

3. Procédé selon la revendication 1 ou 2, **caractérisé en ce que** le matériau en forme de bande est comprimé, en particulier calandré, après l'application du mélange sur la bande support.

4. Procédé selon l'une quelconque des revendications précédentes, **caractérisé en ce que** le matériau en forme de bande est calandré à l'état encore chaud du mélange.

5. Procédé selon l'une quelconque des revendications précédentes, **caractérisé en ce que** le matériau en forme de bande est calandré sous l'effet de la chaleur.

6. Procédé selon l'une quelconque des revendications précédentes, **caractérisé en ce que** le matériau en forme de bande est déformé de manière tridimensionnelle.

7. Procédé selon l'une quelconque des revendications précédentes, **caractérisé en ce que** le matériau en forme de bande est structuré.

8. Procédé selon l'une quelconque des revendications précédentes, **caractérisé en ce que** des morceaux de cuir de couleur et de taille différentes sont mélangés avec le liant.

9. Procédé selon l'une quelconque des revendications précédentes, **caractérisé en ce qu'**on utilise, comme liant, un polymère, un mélange de polymères ou un bitume.

10. Procédé selon l'une quelconque des revendications précédentes, **caractérisé en ce que** le matériau en forme de bande est divisé en dalles ou en planches.

11. Matériau en forme de bande, analogue au linoleum, à savoir un revêtement de sol, présentant une couche visible et de recouvrement principalement constituée par des matières premières renouvelables et une couche support, **caractérisé en ce que**
- le matériau en forme de bande (1) présente une couche visible et de recouvrement (2), qui contient entre 20% et 80%, en particulier entre 40% et 60% de morceaux de cuir finement divisés, de fibres textiles et un liant, en utilisant, comme morceaux de cuir, des copeaux de cuir de très petites dimensions,
- le liant dans la couche visible et de recouvrement (2) est en un matériau qui est transparent, au moins après avoir été lié dans le matériau en forme de bande (1) fini et
- une autre couche (4) en matériau synthétique, qui est particulièrement résistant à l'usure, est disposée sur la couche visible et de recouvrement (2).

12. Matériau en forme de bande selon la revendication 11, **caractérisé en ce que** la couche visible et de recouvrement (2) présente encore de la laine.

13. Matériau en forme de bande selon la revendication 12, **caractérisé en ce que** les fibres textiles sont des fibres naturelles ou synthétiques.

14. Matériau en forme de bande selon l'une quelconque des revendications 11 à 13, **caractérisé en ce que** la couche visible et de recouvrement (2) formée par le mélange de morceaux de cuir finement divisés, de liant et le cas échéant de laine est une masse résistante à l'usure.

15. Matériau en forme de bande selon l'une quelconque des revendications 11 à 14, **caractérisé en ce que** le liant dans la couche visible et de recouvrement (2) est transparent et les morceaux de cuir finement divisés et le cas échéant la laine et les fibres sont visibles sur la face visible du matériau en forme de bande (1).

16. Matériau en forme de bande selon l'une quelconque des revendications 11 à 15, **caractérisé en ce que** la couche support (3) est constituée par un mat, un tissu, un filé-lié ou un non-tissé.

17. Matériau en forme de bande selon l'une quelconque des revendications 11 à 16, **caractérisé en ce que** le liant dans la couche visible et de recouvrement (2) est constitué par un matériau polymère, de préférence par un mélange de différents matériaux polymères ou par un bitume.
